# EUROPEAN PATENT APPLICATION

(11) **EP 1 909 481 A1**
(43) Date of publication of application: **09.04.2008**
(21) Application number: 07109960.0
(22) Date of filing: 11.06.2007
(51) Int. Cl.: H04N 1/32

(54) **Public network interface device, communication system having the interface device, and driving method thereof**

(30) Priority: 02.10.2006 KR 20060097451
(71) Applicant: Samsung Electronics Co., Ltd., Suwon-si 442-742 Gyeonggi-do (KR)
(72) Inventor: Lee, Jeong-baek, Yeongtong-gu, Suwon-si, Gyeonggi-do (KR); Nam, Jin-hee, seongnam-si, Gyeonggi-do (KR)
(74) Representative: Clark, David James

(57) **Abstract**

A public network interface device includes a first switching unit (171) operating in either an on-hook mode in which a first signal is applied or an off-hook mode in which a second signal is applied, and receiving the first signal and the second signal; a signal conversion unit (174) converting the first signal and the second signal into a first detected signal and a second detected signal, respectively, if the first signal and the second signal are applied in the respective modes; and a second switching unit applying the first signal and the second signal to the signal conversion unit in accordance with the respective modes.

## Description

Aspects of the present invention relate to an interface device, a communication system having the interface device, and a driving method thereof. More particularly, but not exclusively aspects of the present invention relate to a public network interface device, a communication system having the interface device, and a driving method thereof.

Generally, a facsimile communication system is a kind of terminal for data communications such as voice, document, image, and so forth, and particularly the facsimile communication system is an office automation device that transmits/receives data using a public network. Recently, with the development of digital technology, a multifunction device, which is a multifunction terminal having diverse functions of office automation devices such as a facsimile, a printer, a scanner, a copy machine, and so forth, being integrated therein, has appeared.

At present, a facsimile communication system is provided with a telephone function, and uses a method of transmitting/receiving scanned image data using a public network such as telephone lines. In the facsimile communication system having a telephone function as described above, the method of receiving the image data may be performed in an automatic receiving mode or in a manual receiving mode to use both the telephone function and facsimile function.

The operation of the facsimile that receives the image data in a typical manual receiving mode will now be described.

First, the facsimile detects a ring signal and outputs a ring sound. At this time, if a receiving party picks up a handset of the telephone and switches the facsimile over to an off-hook mode, the facsimile recognizes the off-hook mode, detects a calling tone outputted from a transmitter side, and outputs the calling tone through the handset. The receiving party receives the calling tone through the handset, and manipulates a reception key to receive the image data.

In this case, the transmitter side transmits an identification code for identifying the transmitter's facsimile in addition to the ring signal, and transmits a transmission time of the scanned image data and information about the transmitter's facsimile such as transmission page information when transmitting the scanned image data. Typically, information about the transmitter's facsimile is called a transmit terminal identification (TTI).

The above-described identification code of the TTI information is called subscriber identification (CSI) information that is a code for identifying the transmitter's facsimile. The CSI includes an inherent ID of the transmitter's facsimile that is transmitted to the receiver's facsimile, (i.e., a calling subscriber identification), such as a country code, an area code, and a subscriber phone number of the calling subscriber that is the transmitter side.

If the TTI information is received, the receiver's facsimile prints the corresponding TTI information on an upper end part of each page that is printed. In particular, the CSI information is displayed on a display unit provided on an outer side of the receiver's facsimile, for example, an LCD or a 7-segment display, so that a user of the receiver's facsimile can recognize it.

In addition, if an external control signal is received in the receiver's facsimile, (for example, if the receiver's facsimile is connected to another telephone that is not the one provided therein and a user detects a calling tone through the telephone) a remote control signal for receiving the image data is provided to the facsimile system, and thus the facsimile system can receive and print the image data.

In order to detect the TTI information, image data and remote control signal as described above, the facsimile system comprises a line interface unit.

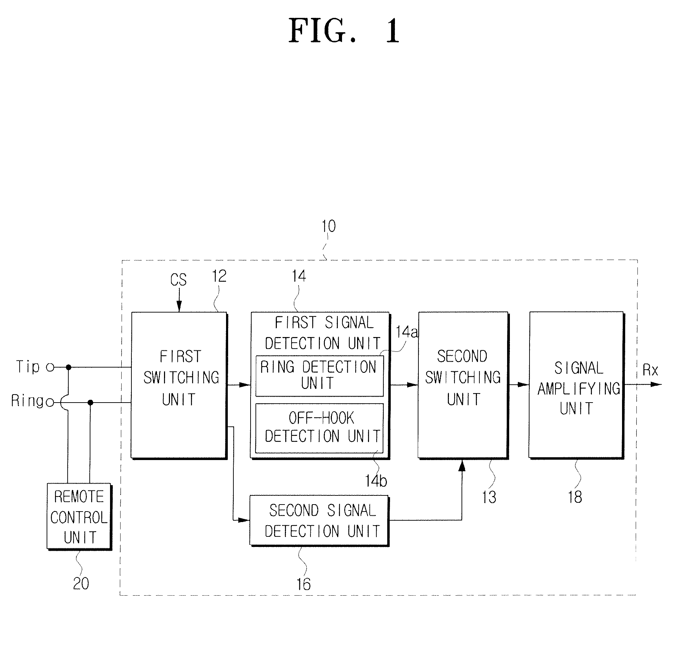

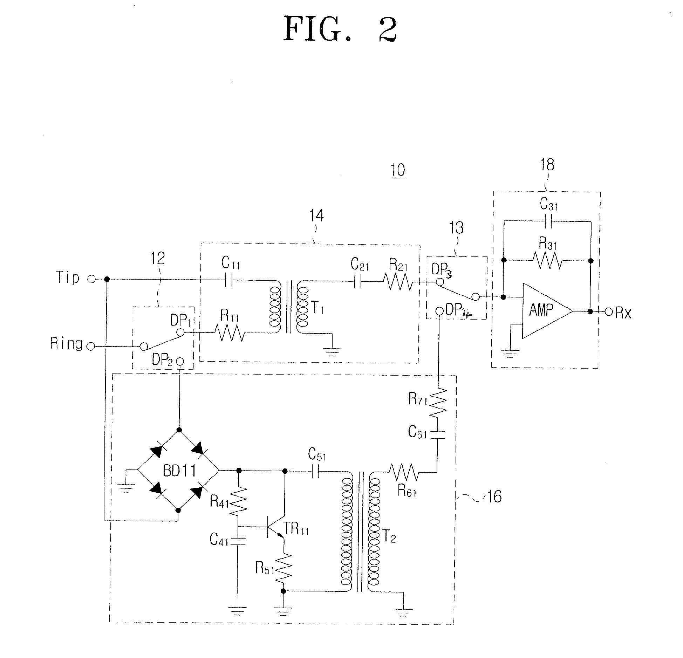

FIG. 1 is a block diagram schematically illustrating the construction of a general line interface unit. FIG. 2 is a detailed circuit diagram of the line interface unit illustrated in FIG. 1. Referring to FIGs. 1 and 2, the general line interface unit 10 includes switching units 12 and 13, a first signal detection unit 14, a second signal detection unit 16, and a signal amplifying unit 18.

The switching units 12 and 13 operate in either an on-hook mode in which the TTI information is provided together with the ring signal or an off-hook mode in which the image data is provided.

The a first switching unit 12 includes a switch element that is provided with a fixed terminal connected to a ring terminal and a free terminal selectively connected to contacts DP1 and DP2. Contacts DP1 and DP2 are connected to the first signal detection unit 14 and the second signal detection unit 16, respectively, in accordance with the on-hook mode and the off-hook mode.

The a second switching unit 13 includes a switch element that is provided with a fixed terminal connected to the signal amplifying unit 18 and a free terminal selectively connected to contacts DP3 and DP4. Contacts DP3 and DP4 are connected to the first signal detection unit 14 and the second signal detection unit 16, respectively, in accordance with the on-hook mode and the off-hook mode.

The line interface unit 10 operates in the on-hook mode if the respective contacts DP1 and DP3 of the switching units 12 and 13 are connected to their respective free terminals, and operates in the off-hook mode if the contacts DP2 and DP4 of the switching units 12 and 13 are connected to their respective free terminals, in response to the specified control signal as described above.

The first signal detection unit 14 includes a transformer circuit T1 having a primary winding connected to a Tip terminal and the first contact DP1 of the first switch unit 12 and a secondary winding having a specified turn ratio to the first winding and connected to the first contact DP3 of the second switching unit 13. The first signal detection unit 14 further includes resistors R11 and R21 and capacitors C11 and C21 connected in series to the respective windings of the transformer circuit T1.

If the switching units 12 and 13 operate in the on-hook mode, the first signal detection unit 14 detects the ring signal applied through the telephone line, the TTI information, and the remote control signal outputted from the remote control unit 20 and applied through the telephone line. Here, the first signal detection unit 14, although not illustrated in FIG. 2, may include an off-hook detection unit 14b for judging whether the user has picked up or put the handset of the telephone down in order to judge the on-hook mode and the off-hook mode.

The second signal detection unit 16 includes a transformer circuit T2 having a primary winding connected to a full-wave rectifier BD11 and a secondary winding having a specified turn ratio to the first winding and connected to the second contact DP4 of the second switching unit 13. The second signal detection unit 16 further includes resistors R41 to R71 and capacitors C41 to C61 connected in series/parallel to the respective windings of the transformer circuit T2. In this case, the full-wave rectifier BD11 is connected to the second contact DP2 of the first switch unit 12 and a Tip terminal. If the switching units 12 and 13 operate in the off-hook mode, the second signal detection unit 16 detects the image data provided through the telephone line.

The signal amplifying unit 18 is connected to the fixed terminal of the second switching unit 13, amplifies signals detected through the first signal detection unit 14 in the on-hook mode and the image data detected through the second signal detection unit 16 in the off-hook mode, and outputs the amplified signals and data to a following modem (not illustrated). For this, the signal amplifying unit 18 includes a feedback loop composed of an operational amplifier AMP, a resistor R31, and a capacitor C31.

In order to construct the line interface unit LIU having the above-described construction, the transformer circuits T1 and T2 for detecting the signals provided in the on-hook mode and the image data provided in the off-hook mode should be provided. Since components constituting the transformer circuits T1 and T2 are expensive, the manufacturing cost of the LIU is increased, and this causes the manufacturing costs of the public network interface device having the LIU and the communication system also to be increased.

In addition, the construction of the transformer circuits T1 and T2 requires space for installation, and this make miniaturization of the product difficult.

According to another aspect of the present invention, the first switching unit operates in either an on-hook mode in which a first signal is applied or an off-hook mode in which a second signal is applied, and receives the first signal and the second signal. The signal conversion unit converts the first signal and the second signal into a first detected signal and a second detected signal, respectively, if the first signal and the second signal are applied in the respective modes. The second switching unit applies the first signal and the second signal to the signal conversion unit in accordance with the respective modes.

Suitably, the interface device may further include a signal amplifying unit amplifying the first and second signals up to a specified level.

Suitably, the interface device may further include a third switching unit operating in association with the first switching unit, and providing the first and second detected signals outputted from the signal conversion unit to the signal amplifying unit in the respective modes.

Suitably, the first signal may include a ring signal and a transmitter identification signal. The first signal may further include a remote control signal applied from an external control device. The second signal may include image data that is interfaced in the off-hook mode.

According to another aspect of the present invention, there is provided a public network interface device, connected to a ring terminal and a tip terminal of a telephone line, interfacing signals inputted/outputted between a modem and a public telephone network, which includes a first switching unit, connected to the tip terminal and the ring terminal, selecting one of a first signal channel and a second signal channel, a signal conversion unit converting signals applied through the first signal channel and the second signal channel into detected signals of a specified level, and a second switching unit selectively connecting one of the first and second signal channels to the signal conversion unit.

Suitably, the interface device may further include a signal amplifying unit, commonly connected to the first and second signal channels, amplifying the detected signals outputted from the signal conversion unit up to a specified level.

Suitably, the interface device may further include a third switching unit operating in association with the first switching unit and connecting the first and second signal channels to the signal amplifying unit.

Suitably, the signal amplifying unit may include an operational amplifier having a first input terminal connected to the first switching unit and a second input terminal connected to a ground electrode.

Suitably, the respective switching unit may include a relay switch.

Suitably, the signal conversion unit may include a transformer circuit having a specified turn ratio.

Suitably, the second switching unit may be connected to a primary winding of the transformer circuit.

According to still another aspect of the present invention, there is provided a communication system, which includes a line interface unit, a modem, and a control unit.

Suitably, the line interface unit may be connected to a tip terminal and a ring terminal of a telephone line, and detect a first analog signal and a second analog signal respectively applied to the telephone line in an on-hook mode and in an off-hook mode. The modem may convert the detected first and second analog signals into first and second digital signals, respectively. The control unit may control the line interface unit to select one of the on-hook mode and the off-hook mode, and display the first digital signal in a specified display area.

Suitably, the line interface unit may include a first switching unit operating in one of the respective modes under the control of the control unit, a signal conversion unit converting the first and second analog signals into a first detected signal and a second detected signal, respectively, and a second switching unit applying the first and second analog signals that correspond to the respective modes to the signal conversion unit under the control of the control unit.

Suitably, the line interface device may further include a signal amplifying unit amplifying the first and second detected signals up to a specified level.

Suitably, the line interface device may further include a third switching unit operating in association with the first switching unit and providing the first and second detected signals outputted from the signal conversion unit to the signal amplifying unit in the respective modes.

Suitably, the first signal may include a ring signal, a transmitter identification signal, and a remote control signal applied from an external control device.

Suitably, the communication system according to an aspect of the present invention may further include an external signal input unit connected to the telephone line, and the remote control signal may be applied to the telephone line through the external signal input unit.

Suitably, the second signal may include image data that is interfaced in the off-hook mode.

According to still another aspect of the present invention, there is provided a method of driving a public network interface device, provided with a common signal conversion unit interfacing signals inputted/outputted between a modem and a public telephone network, which includes judging a driving mode of the interface device, if the driving mode is an on-hook mode as a result of judgment, activating a first signal channel transmitting a first signal applied in the on-hook mode, connecting the first signal channel with the common signal conversion unit, and converting the first signal into a first detected signal through the common signal conversion unit.

The method of driving a public network interface device may further include if the driving mode is an off-hook mode as a result of judgment, activating a second signal channel transmitting a second signal applied in the off-hook mode, connecting the second signal channel with the common signal conversion unit, and converting the second signal into a second detected signal through the common signal conversion unit.

The method of driving a public network interface device may further include amplifying the first and second detected signals up to a specified level and outputting the amplified signals in order to detect the first and second detected signals.

Suitably, the first signal may include a ring signal and a transmitter identification signal.

Suitably, the first signal may further include a remote control signal applied from an external control device.

Suitably, the second signal may include image data that is interfaced in the off-hook mode.

According to another aspect of the present invention, there is provided a public network interface device, connected to a first terminal and a second terminal of a communication path, interfacing signals inputted/outputted between a modem and a public telephone network, the interface device including a first switching unit connected to the second terminal and the first terminal of the communication path to operate in an on-hook mode or an off-hook mode; a signal channel unit including a first signal channel and a second signal channel, the first signal channel connected between a transformer and the second terminal and the first terminal of the communication path when the first switch unit operates in the on-hook mode, and the second signal channel connected between the transformer and the second terminal and the first terminal of the communication path when the first switch unit operates in the off-hook mode; and a second switching unit selecting between the first signal channel and the second signal channel according to the on-hook and off-hook modes.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram schematically illustrating the construction of a general line interface unit;
FIG. 2 is a detailed circuit diagram of the line interface unit illustrated in FIG. 1;
FIG. 3 is a block diagram schematically illustrating the construction of a communication system according to an embodiment of the present invention;
FIG. 4 is a block diagram schematically illustrating the construction of a public network interface device according to an embodiment of the present invention;
FIG. 5 is a detailed circuit diagram of the public network interface device illustrated in FIG. 4; and
FIG. 6 is a flowchart illustrating a method of driving a public network interface device according to an embodiment of the present invention.

Reference will now be made in detail to the present embodiments of the present invention, examples of which are illustrated in the accompanying drawings.

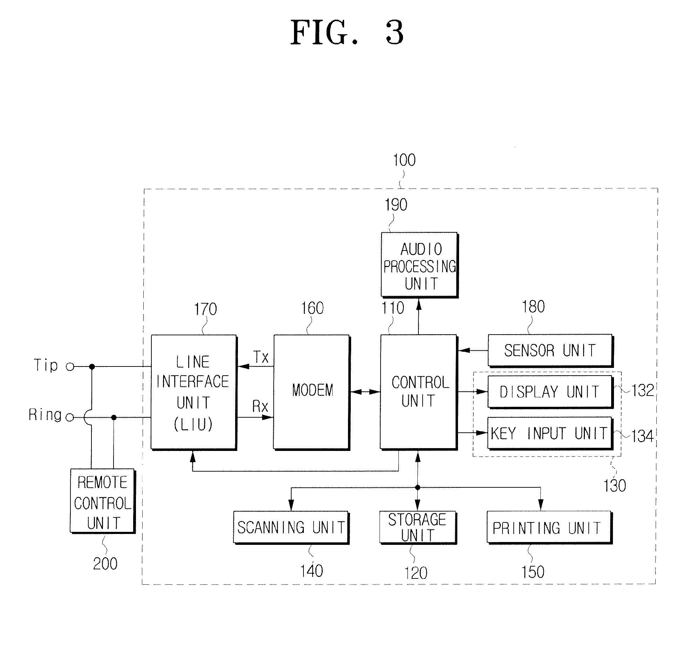

FIG. 3 is a block diagram schematically illustrating the construction of a communication system 100 according to an embodiment of the present invention. Referring to FIG. 3, the communication system 100 includes a control unit 110, a storage unit 120, an operation panel unit 130, a scanning unit 140, a printing unit 150, a modem 160, a line interface unit 170, and a sensor unit 180. However, it is understood that additional elements can be included, and that ones of the elements such as the display unit 132 and/or other scanning unit 140, can be separately attached.

The control unit 110 controls the operation of the communication system 100 according to predetermined programs. The storage unit 120 includes a ROM for storing various kinds of control programs required to implement the functions of the communication system 100 and a RAM for storing various kinds of data such as protocol data and text data generated while the control programs are executed, and the data is read out from or stored in the storage unit 120 under the control of the control unit 110. However, it is understood that other types of memory can be used, such that both ROM and RAM need not to be used.

The operation panel unit 130 includes a display unit 132 and a key input unit 134.

The display unit 132 displays the operation state of the communication system 100 under the control of the control unit 110. In addition, if transmit terminal identification (TTI) information is provided from the transmitter side, the display unit 132 displays called subscriber identification (CSI) information of the transmitter side among the TTI information under the control of the control unit 110. That is, the display unit 132 displays a country code, an area code, and a subscriber phone number of the transmitter side itself. For this, the display unit 132 may be implemented by an LCD panel, a 7-segment display, and so forth. Moreover, the display unit 132 can be connected to the system 100, such as on a television or computer monitor.

The key input unit 134 includes a plurality of manipulation keys that are manipulated by a user to input control signals based on the operation state of the communication system 100 displayed on the display unit 132. The control signals inputted through the manipulation keys are applied to the control unit 110 that controls the whole operation of the communication system 100. While described as keys, it is understood that other mechanisms can be used to input the control signals.

The operation panel unit 130 may include a touch screen panel in which the display unit 132 and the key input unit 134 are constructed in a body.

The scanning unit 140 forms image data by scanning a document, and transmits the image data to the control unit 110.

The printing unit 150 prints the image data received in the communication system 100 on a recording paper or any type of recording medium.

In the case where the communication system 100 operates as the transmitter side, the modem 160 modulates the image data into data in the form of an analog signal. In the case where the communication system 100 operates as a receiver side, the modem 160 demodulates the data in the form of an analog signal into digital data, under the control of the control unit 110.

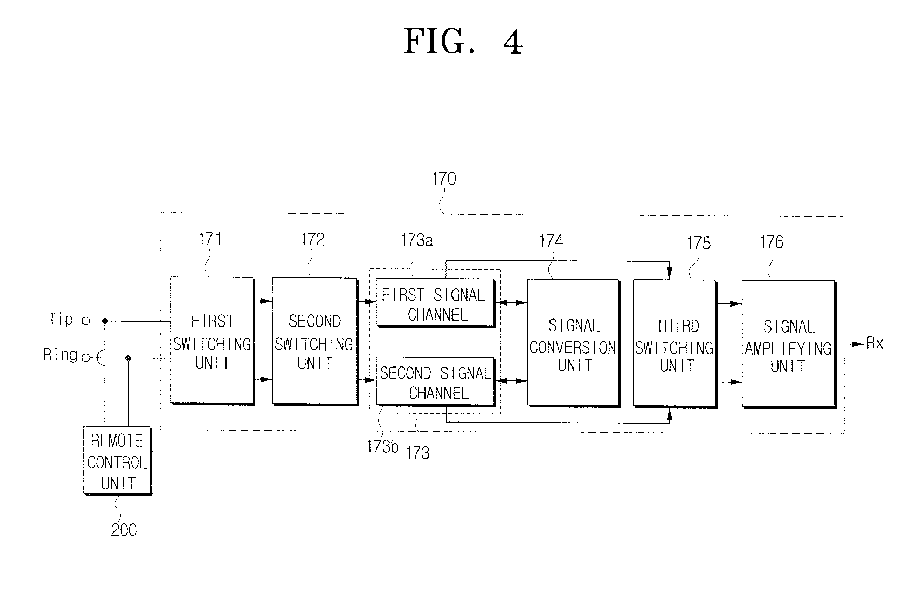

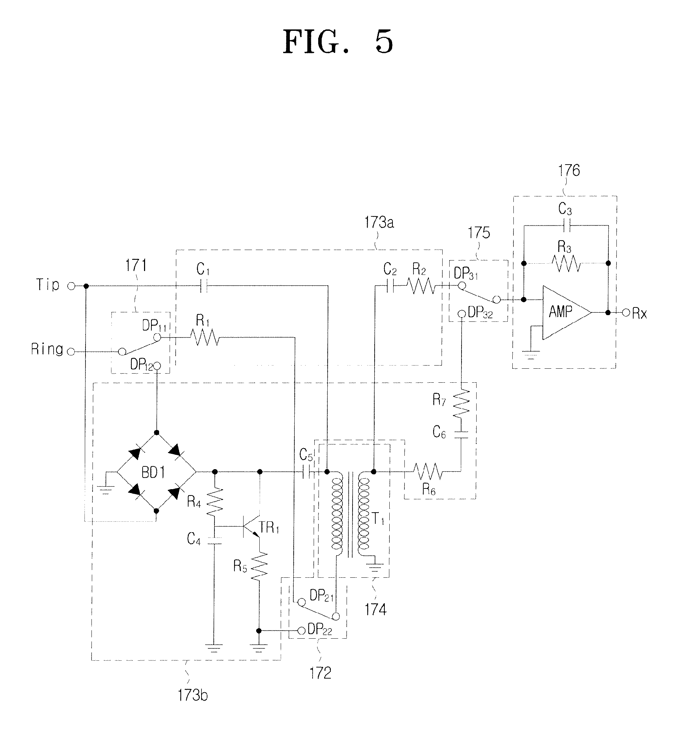

The line interface unit (or public network interface device) 170 is connected to a tip terminal and a ring terminal of the telephone line and the line interface unit 170 performs data interfacing between the modem 160 and the telephone line, under the control of the control unit 110. Here, like the off-hook detection unit shown in FIG. 1, the line interface unit 170 includes an off-hook detection unit (not shown) capable of detecting whether the communication system 100 is in an off-hook state due to the user's picking up of a handset or in an on-hook state due to the user's putting of the handset down. The detailed features of the line interface unit 170 will be described with reference to FIGs. 4 and 5.

A sensor unit 180 senses the residual quantity of the recording paper or the placement of a document to be scanned by the scanning unit 140. In addition, in the case where the printing unit 150 is provided with a device such as a fuser for fusing toner sprayed on the paper, the sensor unit 180 performs diverse sensing functions such as sensing of the temperature of the fuser in order to control the temperature of the fuser.

The communication system 100 according to the shown embodiment of the present invention further includes an audio processing unit 190 reading audio data stored in the storage unit 120, and converting and outputting the read audio data. However, it is understood that the processing unit 190 need not be included in all embodiments of the invention.

The communication system 100 according to the shown embodiment of the present invention further includes an external signal input unit (not illustrated) for receiving a remote control signal outputted from a remote control unit 200, and the remote control signal may be inputted to the line interface unit 170 through the telephone line. However, it is understood that the external signal input unit need not be used in all embodiments of the invention.

FIG. 4 is a block diagram schematically illustrating the construction of a public network interface device according to an embodiment of the present invention, and FIG. 5 is a detailed circuit diagram of the public network interface device illustrated in FIG. 4. The public network interface device to be described hereinafter is an embodiment of the line interface unit 170 as illustrated in FIG. 3.

Referring to FIGs. 3 and 4, the public network interface device 170 according to an embodiment of the present invention includes a first switching unit 171, a second switching unit 172, a signal channel unit 173, a signal conversion unit 174, a third switching unit 175, and a signal amplifying unit 176.

The first switching unit 171 is connected to the tip terminal and the ring terminal of the telephone line, and is controlled by the control unit 110 to operate in either an on-hook mode (in which a ring signal, TTI information, and remote control signal outputted from the remote control unit 200 are applied), or an off-hook mode in which the image data is applied.

The second switching unit 172 selects one of a first signal channel 173a and a second signal channel 173b provided in the signal channel unit 173 under the control of the control unit 110. That is, as the first switching unit 171 operates in respective on-hook or off-hook modes. The second switching off-hook unit 172 selectively applies the signals to the signal conversion unit 174 through different paths.

The signal channel unit 173 includes the first signal channel 173a that is connected to the tip terminal and the ring terminal of the telephone line when the first switching unit 171 operates in the on-hook mode. The second signal channel 173b is connected to the tip terminal and the ring terminal of the telephone line when the first switching unit 171 operates in the off-hook mode.

The signal conversion unit 174 is connected to the first signal channel 173a by the switching operation of the first switching unit 171 and the second switching unit 172 in the on-hook mode, detects the ring signal applied through the telephone line, TTI information, and remote control signal outputted from the remote control unit 200 and applied through the telephone line, and converts the detected signals into a first detected signal. Also, the signal conversion unit 174 is connected to the second signal channel 173b by the switching operation of the first switching unit 171 and the second switching unit 172 in the off-hook mode, detects the image data applied through the telephone line, and converts the detected signals into a second detected signal.

The third switching unit 175 operates in association with the first switching unit 171, operates in either the on-hook mode or the off-hook mode, and selectively connects the first signal channel 173a or the second signal channel 173b to the signal amplifying unit 176.

The signal amplifying unit 176 is selectively connected to the first signal channel 173a or the second signal channel 173b by the switching operation of the third switching unit 175, and amplifies the first detected signal or the second detected signal outputted from the signal conversion unit 174 up to a predetermined voltage level, to output the amplified first or second detected signal so that the modem 160 can recognize the first or second detected signal.

Referring to FIG. 5, the first switching unit 171 includes a switch element that is provided with a fixed terminal connected to the ring terminal and a free terminal which is selectively connected to contacts DP11 and DP12. Contacts DP11 and DP12 are connected to the first signal channel 173a and the second signal channel 173b, respectively. The public network interface device 170 operates in the on-hook mode if the free terminal is connected to the first contact DP11, and operates in the off-hook mode if the free terminal is connected to the second contact DP12, under the control of the control unit 110.

Also, the third switching unit 175 includes a switch element that is provided with a fixed terminal connected to a first input terminal of the signal amplifying unit 176 and a free terminal which is selectively connected to contacts DP31 and DP32. Contacts DP31 and DP32 are connected to the first signal channel 173a and the second signal channel 173b, respectively. The public network interface device 170 operates in the on-hook mode if the free terminal is connected to the first contact DP31, and operates in the off-hook mode if the free terminal is connected to the second contact DP32, under the control of the control unit 110.

For this, the first switching unit 171 and the third switching unit 175 may include relay switches that are switched between the contacts DP11 and DP12 and between the contacts DP31 and DP32, respectively, by the same control signal applied from the control unit 110.

The second switching unit 172 includes a switch element composed of a free terminal that is switched between a first contact DP21 connected to the first signal channel 173a and a second contact DP22 connected to the second signal channel 173b. The public network interface device 170 operates in the on-hook mode if the free terminal is connected to the first contact DP21, and operates in the off-hook mode if the free terminal is connected to the second contact DP22, under the control of the control unit 110.

For this, the second switching unit 172 may include a relay switch that is switched between the contacts DP21 and DP22 by the control signal applied from the control unit 110 to the first switching unit 171.

The signal channel unit 173 is provided with the first signal channel 173a and the second signal channel 173b.

The tip terminal is connected to the signal conversion unit 174, through the first signal channel 173a, when the first contact DP11 of the first switching unit 171 and the first contact DP21 of the second switching unit 172 are connected to their respective free terminals. The first signal channel 173a forms a closed loop between the tip terminal and the ring terminal when the first contacts DP11 and DP21 of the first switching unit 171 and the second switching unit 172 are connected to their free terminals, respectively, in the on-hook mode.

In addition, through the first signal channel 173a, the signal conversion unit 174 is connected to the first contact DP31 of the third switching unit 175. When the first contact DP31 of the third switching unit 175 is connected to the free terminal of the first signal channel 173a in the on-hook mode, the first signal channel 173a outputs the first detected signal (i.e., the ring signal detected by the signal conversion unit 174, the TTL information, and the remote control signal), to the signal amplifying unit 176 through the first contact DP31 of the third switching unit 175.

The first signal channel 173a includes capacitors C1 and C2 for intercepting a DC component, a first resistor R1 for satisfying the impedance regulations, and a second resistor R2 for compensating for a signal attenuated by the first resistor.

The tip terminal is connected to the signal conversion unit 174 through the second signal channel 173b, when the second contact DP12 of the first switching unit 171 and the second contact DP22 of the second switching unit 172 are connected to their respective free terminals. The second signal channel 173b forms a closed loop between the tip terminal and the ring terminal when the second contacts DP12 and DP22 of the first switching unit 171 and the second switching unit 172 are connected to their respective free terminals, in the off-hook mode.

The second signal channel 173b includes a full-wave rectifier BD1, which is connected to the tip terminal and the ring terminal through the second contact DP12 of the first switching unit 171. The full-wave rectifier BD1 rectifies the signals applied to the tip terminal and the ring terminal to satisfy the impedance regulations. Also, in the second signal channel 173b, elements R4, R5, C4, and TR1 for forming a closed loop between the tip terminal and the ring terminal, and a capacitor C5 for intercepting a DC component are provided. In addition, in the second signal channel 173b, a capacitor C6 for intercepting a DC component, and resistors R6 and R7 connected in series between the signal conversion unit 174 and the third switching unit 175 are provided.

The signal conversion unit 174 includes a transformer circuit T1.

The primary winding of the transformer circuit T1 is connected to the first signal channel 173a as the first contacts DP11 and DP21 of the first and second switching units 171 and 172 are connected to the free terminals of the switch elements, respectively, in the on-hook mode. Also, the secondary winding of the transformer circuit T1 is connected to the first signal channel 173a as the first contact DP31 of the third switching unit 175 is connected to the free terminal of the first signal channel, in the on-hook mode. That is, the transformer circuit T1 converts the ring signal, the TTI information, and the remote control signal, which are applied to the primary winding through the first signal channel 173a, into the first detected signal by amplifying the applied signals according to the predetermined turn ratio of the primary winding to the secondary winding, and outputs the first detected signal through the first signal channel 173a.

In addition, the primary winding of the transformer circuit T1 is connected to the second signal channel 173b as the second contacts DP12 and DP32 of the first and third switching units 171 and 175 are connected to the free terminals of the switch elements, respectively, in the off-hook mode. Also, the secondary winding of the transformer circuit T1 is connected to the second signal channel 173b as the second contact DP32 of the third switching unit 175 is connected to the free terminal of the first signal channel, in the off-hook mode. That is, the transformer circuit T1 converts the image data, which is applied to the primary winding through the second signal channel 173b, into the second detected signal by amplifying the applied image data according to the predetermined turn ratio of the primary winding to the secondary winding, and outputs the second detected signal through the second signal channel 173b.

In this case, the transformer circuit T1 may be constructed to have a high impedance, for example, a high impedance in the range of 20kΩ~30kΩ, to satisfy the on-hook impedance regulations. By contrast, the transformer circuit T1 may be constructed to have a low impedance, for example, a low impedance in the range of 500Ω~700Ω, to reduce the manufacturing cost. In this case, the first resistor R1 may have a high resistance value, for example, a high resistance value in the range of 20kΩ~30kΩ, to satisfy the on-hook impedance regulations.

The signal amplifying unit 176 is connected to the fixed terminal of the third switching unit 175. Specifically, the signal amplifying unit 176 is connected to the first signal channel 173a through the first contact DP31 of the third switching unit 175 in the on-hook mode, and is connected to the second signal channel 173b through the second contact DP32 of the third switching unit 175 in the off-hook mode.

In the on-hook mode, the signal amplifying unit 176 amplifies the first detected signal detected by the signal conversion unit 174 and inputted through the first signal channel 173a up to a predetermined voltage level to output the amplified first detected signal. In the off-hook mode, the signal amplifying unit 176 amplifies the second detected signal detected by the signal conversion unit 174 and inputted through the second signal channel 173b to output the amplified second detected signal.

For this, the signal amplifying unit 176 includes an operational amplifier AMP having a first input terminal connected to the fixed terminal of the third switching unit 171 b and a second input terminal connected to the ground electrode, a resistor R3 and a capacitor C3 connected in parallel to the operational amplifier to form a feedback loop.

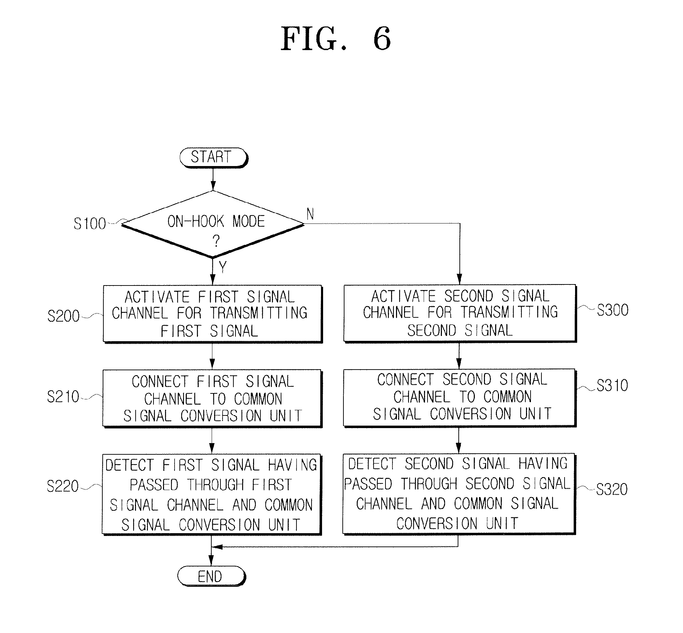

FIG. 6 is a flowchart illustrating a method of driving a public network interface device according to an embodiment of the present invention. Referring to FIGs. 3, 4, and 6, the method of driving a public circuit interface device according to an embodiment of the present invention includes judging whether the present driving mode is an on-hook mode at operation S100, activating the first signal channel 173a for transmitting a first signal at operation S200, connecting the first signal channel 173a to a common signal conversion unit (e.g., the signal conversion unit 174) at operation S21 0, and detecting the first signal having passed through the first signal channel and the common signal conversion unit at operation S220.

The method of driving a public network interface device according to an embodiment of the preset invention further includes activating the second signal channel 173a for transmitting a second signal at operation S300, connecting the second signal channel with the common signal conversion unit (e.g., the signal conversion unit 174) at operation S310, and detecting the second signal having passed through the second signal channel and the common signal conversion unit at operation S320.

At operation S100, the control unit 110 judges whether the driving mode of the communication system 100 is the on-hook mode or the off-hook mode. For this, the line interface unit 170 is provided with an off-hook detection unit, such as the unit 14b as shown in FIG. 1, and detects whether the user has picked up or put the handset of the telephone down, (i.e., whether the communication system 100 is in the off-hook state or in the on-hook state), to provide a corresponding detected signal to the control unit 110.

If the driving mode is the on-hook mode as a result of judgment at operation S100, the control unit 110 controls the first signal channel 173a to be activated by activating the first and third switching units 171 and 175 included in the line interface unit 170, (i.e., the public network interface device 170), at operation S200. That is, the control unit 110 activates the first signal channel 173a by outputting the control signal so that the respective free terminals of the first and third switching units 171 and 175 are connected to the first contacts DP11 and DP31, respectively.

At operation S21 0, the control unit 110 electrically connects the first signal channel 173a to the signal conversion unit 174 by activating the second switching unit 172 included in the public network interface device 170. That is, the control unit 110 connects the signal conversion unit 174 to the first signal channel 173a by outputting the control signal so that the free terminal of the second switching unit 172 is connected to the first contact DP21.

Here, operations S200 and S21 0 have been described as independent operations for clear description of the construction and for convenience in understanding. However, the first to third switching units 171, 172, and 173 may be simultaneously activated by the same control signal applied from the control unit 110.

At operation S220, if the first signal channel 173a is activated through operations S210 and S220 and the first signal channel 173a is connected to the signal conversion unit 174, the first signal applied through the tip terminal and the ring terminal (for example, the ring signal, the TTI information, and the remote control signal), is converted into the first detected signal through the transformer circuit T1. The first detected signal outputted from the transformer circuit T1 is amplified through the signal amplifying unit 176, and then outputted to the modem 160.

Then, the modem 160 demodulates the analog type signal outputted from the signal amplifying unit 176 into a digital signal, and applies the demodulated digital signal to the control unit 110.

If the present driving mode is the off-hook mode as a result of judgment at operation S100, the control unit proceeds to operation S300. At operation S300, the control unit 110 controls the second signal channel 173b to be activated by activating the first switching unit 171 included in the line interface 170 (i.e., the public network interface device 170). That is, the control unit 110 activates the second signal channel 173b by outputting the control signal so that the respective free terminals of the first and second switching units 171 and 175 are connected to the second contacts DP12 and DP32 thereof.

At operation S31 0, the control unit 110 electrically connects the second signal channel 173b to the signal conversion unit 174 by activating the second switching unit 172 included in the public network interface device 170. That is, the control unit 110 connects the signal conversion unit 174 to the second signal channel 173b by outputting the control signal so that the free terminal of the second switching unit 172 is connected to the second contact DP22 of the second switching unit 172.

Here, as similarly described at operations S200 and S210, it is apparent that operations S300 and S310 may be performed so as to simultaneously activate the first and second switching unit 171 and 172 through the same control signal applied from the control unit 110.

If the second signal channel 173b is activated through operations S31 0 and S320 and the second signal channel 173b is connected to the signal conversion unit 174, the second signal being applied through the tip terminal and the ring terminal (for example, the image data), is converted into the second detected signal through the transformer circuit T1 at operation S320. The second detected signal outputted through the transformer circuit T1 is amplified through the signal amplifying unit 176, and then outputted to the modem 160.

Thereafter, the modem 160 demodulates the analog type image data outputted from the signal amplifying unit 176 into digital type image data and provides the digital image data to the control unit 110.

As described above, the public network interface device, the communication system having the interface device, and a driving method thereof according to an aspect of the present invention, includes only one transformer circuit provided in a line interface unit LIU to detect signals being applied through a telephone line. Accordingly the manufacturing cost of the communication system can be reduced.

In addition, by reducing the number of transformers, the manufacturing process margin is simplified, manufacturing costs reduced and the system can be miniaturized.

Although a few preferred embodiments have been shown and described, it will be appreciated by those skilled in the art that various changes and modifications might be made without departing from the scope of the invention, as defined in the appended claims.

While described in the context of a telephone line and/or telephone network by way of example, it is understood that aspects of the invention can be used in other networks or communication paths in addition to or instead of a PSTN, telephone networks, and/or telephone lines. Similarly, the ring terminal and tip terminal can be other terminal types having like signals according to the particular network in which it is used in other aspects.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A public network interface device comprising:
a first switching unit (171) operating in an on-hook mode in which a first signal is applied or an off-hook mode in which a second signal is applied, and receiving the first signal and the second signal;
a signal conversion unit (174)converting the first signal and the second signal into a first detected signal and a second detected signal, respectively, if the first signal and the second signal are applied in the respective modes; and
a second switching unit (172) applying the first signal and the second signal to the signal conversion unit in accordance with the respective modes.

2. The interface device of claim 1, further comprising a signal amplifying unit (176) amplifying the first and second signals to a specified level.

3. The interface device of claim 2, further comprising a third switching unit (175) operating in association with the first switching unit (171), and providing the first and second detected signals outputted from the signal conversion unit to the signal amplifying unit in the respective modes.

4. The interface device of claim 1, 2 or 3, wherein the first signal includes a ring signal and a transmitter identification signal.

5. The interface device of any preceding claim, wherein the first signal further includes a remote control signal applied from an external control device.

6. The interface device of any preceding claim, wherein the second signal includes image data that is interfaced in the off-hook mode.

7. A public network interface device, connected to a ring terminal and a tip terminal of a telephone line interfacing signals inputted/outputted between a modem and a public telephone network, the interface device comprising:
a first switching unit (171), connected to the tip terminal and the ring terminal selecting one of a first signal channel and a second signal channel;
a signal conversion unit (174) converting signals applied through the first signal channel and the second signal channel into detected signals of a specified level; and
a second switching unit (172) selectively connecting the first and second signal channels to the signal conversion unit.

8. The interface device of claim 7, further comprising a signal amplifying unit (176), commonly connected to the first and second signal channels, amplifying the detected signals outputted from the signal conversion unit to a specified level.

9. The interface device of claim 8, further comprising a third switching unit (175) operating in association with the first switching unit (171), and connecting the first and second signal channels to the signal amplifying unit (176).

10. The interface device of claim 8 or 9, wherein the signal amplifying unit (176) comprises an operational amplifier (AMP) having a first input terminal connected to the third switching unit (175) and a second input terminal connected to a ground electrode.

11. The interface device of any one of claims 7-10, wherein one or more of the respective switching units (171, 172, 175) comprise a relay switch.

12. The interface device of claim 7, wherein the signal conversion unit (174) comprises a transformer circuit (T₁) having a specified turn ratio.

13. The interface device of claim 12, wherein the second switching unit (172) is connected to a primary winding of the transformer circuit (T₁).

14. A communication system comprising:
a line interface unit (170), connected to a tip terminal and a ring terminal of a telephone line detecting a first analog signal and a second analog signal respectively applied to the telephone line in an on-hook mode and in an off-hook mode;
a modem (160) converting the detected first and second analog signals into first and second digital signals, respectively; and
a control unit (110) controlling the line interface unit to select one of the on-hook mode and the off-hook mode, and displaying the first digital signal in a specified display area;
wherein the line interface unit comprises:
a first switching unit (171) operating in one of the respective on-hook and off-hook modes under the control of the control unit;
a signal conversion unit (174) converting the first and second analog signals into a first detected signal and a second detected signal, respectively; and
a second switching unit (172) applying the first and second analog signals that correspond to the respective on-hook and off-hook modes to the signal conversion unit (174) under the control of the control unit (110).

15. The communication system of claim 14, wherein the line interface device further comprises a signal amplifying unit (176) amplifying the first and second detected signals up to a specified level.

16. The communication system of claim 15, wherein the line interface device further comprises a third switching unit (175) operating in association with the first switching unit (171) and providing the first and second detected signals outputted from the signal conversion unit (174) to the signal amplifying unit (176) in the respective modes.

17. The communication system of claim 14, 15 or 16, wherein the first analog signal is selectable between a ring signal, a transmitter identification signal, and a remote control signal applied from an external control device (200).

18. The communication system of any one of claims 14-17, further comprising an external signal input unit connected to the telephone line;
wherein the remote control signal is applied to the telephone line through the external signal input unit.

19. The communication system of any one of claims 14-18, wherein the second signal includes image data that is interfaced in the off-hook mode.

20. A method of driving a public network interface device, provided with a common signal conversion unit, interfacing signals inputted/outputted between a modem and a public telephone network, the method comprising:
detecting a driving mode of the interface device (S100);
activating a first signal channel transmitting a first signal applied in an on-hook mode, if the driving mode is detected to be the on-hook mode (S200);
connecting the first signal channel with the common signal conversion unit (S210); and
converting the first signal into a first detected signal through the common signal conversion unit (S220),
wherein the common signal conversion unit is connectable to convert a second signal in an off-hook mode (S320).

21. The method of claim 20, further comprising:
activating the second signal channel transmitting a second signal applied in the off-hook mode, if the driving mode is the off-hook mode as a result of judgment (S300);
connecting the second signal channel with the common signal conversion unit (S310); and
converting the second signal into a second detected signal through the common signal conversion unit (S320).

22. The method of claim 21, further comprising amplifying the first and second detected signals up to a specified level and outputting the amplified signals to detect the first and second detected signals.

23. The method of claim 20, 21 or 22, wherein the first signal includes a ring signal and a transmitter identification signal.

24. The method of claim 20, 21, 22 or 23, wherein the first signal further includes a remote control signal applied from an external control device.

25. The method of any one of claims 20-24, wherein the second signal includes image data that is interfaced in the off-hook mode.

26. A public network interface device, connected to a first terminal and a second terminal of a communication path interfacing signals inputted/outputted between a modem and a public communicationnetwork, the interface device comprising:
a first switching unit (171) connected to the second terminal and the first terminal of the communication path to operate in an on-hook mode or an off-hook mode;
a signal channel unit (173) including a first signal channel (173a) and a second signal channel (173a), the first signal channel connected between a transformer (T₂)and the second terminal and the first terminal of the communication path when the first switch unit (171) operates in the on-hook mode, and the second signal channel (173b) connected between the transformer (T₁) and the second terminal and the first terminal of the communication path when the first switch unit (171) operates in the off-hook mode; and
a second switching unit (172) selecting between the first signal channel and the second signal channel according to the on-hook and off-hook modes.

27. The interface device of claim 26, further comprising a signal conversion unit (174) coupled to the first signal channel (173a) and to the second signal channel (173b), wherein when the signal conversion unit (174) is in the on-hook mode, the signal conversion unit (174) detects a first signal applied through the communication path and converts the detected first signal into a first detected signal, and when the signal conversion unit is in the off-hook mode, the signal conversion unit detects a second signal applied through the communication path and converts the detected second signal into a second detected signal.

28. The interface device of claim 27, further comprising a third switching unit and a signal amplifying unit (176), wherein the third switching unit (175) operates in association with the first switching unit (171) in the on-hook mode or the off-hook mode, and selectively connects the first signal channel (173a) or the second signal channel (173b) to the signal amplifying unit (176).

29. The interface device of claim 28, wherein the signal amplifying unit (176) amplifies the first detected signal or the second detected signal output from the signal conversion unit (174) to a predetermined voltage level, to output the amplified first or second detected signal to a modem (160).

30. The interface device of claim 27, 28 or 29, wherein the first signal applied through the communication path includes one or more of a ring signal, a transmitter identification signal and a remote control signal.

31. The interface device of claim 27, 28, 29 or 30, wherein the second signal applied through the communication path includes image data that is interfaced in the off-hook mode.

32. The interface device of any one of claims 26-31, wherein the interface device comprises a facsimile device.

33. A method of selectively connecting a common signal conversion unit to interface signals transferred between a modem and a public telephone network, the method comprising:
when an on-hook mode is detected, connecting a first signal channel to the common signal conversion unit to convert a first one of the signals into a first detected signal; and
when an off-hook mode is detected, connecting a second signal channel to the common signal conversion unit to convert a second one of the signals into a second detected signal.

34. The method of claim 33, wherein the common signal conversion unit comprises a transformer used to convert the first and second signals to the first and second detected signals.
